# EUROPÄISCHE PATENTSCHRIFT

(11) **EP 2 944 167 B1**
(45) Veröffentlichungstag und Bekanntmachung des Hinweises auf die Patenterteilung: **28.11.2018**
(21) Anmeldenummer: 14168659.2
(22) Anmeldetag: 16.05.2014
(51) Int. Cl.: A01B 45/02

(54) **Bodenbearbeitungsvorrichtung**
Soil cultivation device
Dispositif de traitement de sol

(43) Veröffentlichungstag der Anmeldung: 18.11.2015
(73) Patentinhaber: Redexim Handel- En Exploitatie Maatschappij B.V., 3702 AC Zeist (NL)
(72) Erfinder: de Bree, Cornelius Hermanus Maria, 3702 AC Zeist (NL)
(74) Vertreter: dompatent von Kreisler Selting Werner - Partnerschaft von Patent- und Rechtsanwälten mbB

(56) Entgegenhaltungen:
- EP-A1- 0 037 595
- EP-A1- 2 014 146
- EP-A1- 2 106 679
- EP-A1- 2 123 143
- DE-A1-102005 021 025

## Beschreibung

Die Erfindung betrifft eine fahrbare Bodenbearbeitungsvorrichtung nach dem Oberbegriff des Anspruchs 1 sowie ein Verfahren zum Bearbeiten eines Bodens nach dem Oberbegriff des Anspruchs 12.

Es sind fahrbare Bodenbearbeitungsvorrichtungen aus dem Stand der Technik bekannt, die mindestens einen Maschinenrahmen, einen Antrieb und mindestens einen von dem Antrieb auf und abbewegbaren an dem Maschinenrahmen schwenkbar gelagerten Tragarm aufweisen. Die Bodenbearbeitungsvorrichtungen weisen ferner mindestens ein Stechwerkzeug auf, das um eine erste Schwenkachse relativ zu dem Tragarm schwenkbar ist und mittels des Tragarms auf- und abbewegbar ist, wobei das Stechwerkzeug in den Boden einstechbar und wieder herausziehbar ist. Das Stechwerkzeug befindet sich vor dem Einstechen in den Boden in einer Ausgangslage unter einem vorgegebenen Einstechwinkel und führt in dem Boden aufgrund der Bewegung des Maschinenrahmens in Fahrtrichtung eine die Auf- und Abbewegung überlagernde Schwenkbewegung um die erste Schwenkachse in Richtung einer ersten Schwenkrichtung aus. Die Bodenbearbeitungsvorrichtung weist ferner mindestens eine Rückholeinrichtung auf, die an einem ersten Ende mit einem Maschinenrahmen gekoppelt ist und an einem zweiten Ende mit dem Stechwerkzeug gekoppelt ist, wobei die Rückholeinrichtung ein Rückholelement aufweist, das das Stechwerkzeug nach dem Austritt aus dem Boden zurück in die Ausgangslage durch Verschwenken des Stechwerkzeugs in eine der ersten Schwenkrichtungen entgegengesetzte zweite Schwenkrichtung überführt.

Aus der europäischen Offenlegungsschrift EP-A-0037595 ist eine Bodenbearbeitungsvorrichtung bekannt, die zwei parallelogrammartig geführte Tragarme aufweist, die am einen Ende schwenkbar einen Werkzeughalter halten und die an einem anderen Ende an einem Maschinenrahmen schwenkbar gelagert sind. Eine Schubstange eines Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Sobald sich das Stechwerkzeug außerhalb des Bodens befindet, wird der Tragarm aufgrund der Federkraft an den Anschlag gezogen. Bei eingestochenem Stechwerkzeug und Vorwärtsbewegung der Bodenbearbeitungsvorrichtung verschwenkt das Werkzeug mit dem Werkzeughalter entgegen der Fahrtrichtung und der längenveränderliche Tragarm wird gegen die Federkraft verlängert.

DE 10 2005 021 025 A1 betrifft ein relativ zu dem Boden in einer Bewegungsrichtung bewegbares Bodenbearbeitungsgerät für die Tiefenlockerung von Böden mit: Einem Gerätechassis oder Geräterahmen, einer Reihe von Tragarmen, von denen jeder mit einem ersten Bereich, insbesondere einem ersten Endbereich, an dem Gerätechassis oder dem Geräterahmen um eine erste Schwenkachse auf- und abschwenkbar angelenkt ist, und einer Antriebseinrichtung zum Antreiben der Auf- und Abbewegung der Tragarme, je einer Stechwerkzeuganlenkungseinrichtung zum fest und unbeweglich mit der Stechwerkzeuganlenkungseinrichtung verbundenen Anlenken eines Stechwerkzeuges an einem zweiten Bereich, insbesondere einem zweiten Endbereich, jedes Tragarmes, wobei die Stechwerkzeuganlenkungseinrichtung an dem Tragarm relativ zu dem Tragarm um eine zweite Schwenkachse schwenkbar derart angelenkt ist, dass ein an der Stechwerkzeuganlenkungseinrichtung befestigtes Stechwerkzeug bei Abwärtsbewegung des zugeordneten Tragarmes in den Boden einstechbar ist und dass die Stechwerkzeuganlenkungseinrichtung zumindest bei eingestochenem Stechwerkzeug und Weiterbewegung des Bodenbearbeitungsgeräts in Bewegungsrichtung relativ zu dem Tragarm verschwenkt wird. Ausserdem ist wenigstens ein Getriebe vorgesehen, das zumindest die bei eingestochenem Stechwerkzeug und Weiterbewegung des Bodenbearbeitungsgeräts in Bewegungsrichtung erfolgende Relativbewegung zwischen Stechwerkzeuganlenkungseinrichtung und Tragarm auf wenigstens eine sich nicht mit dem Tragarm mit auf- und abbewegende Einheit überträgt.

Bei den bisher bekannten Bodenbearbeitungsvorrichtungen besteht jedoch der Nachteil, dass die Stechwerkzeuge beschädigt werden können, wenn sie in dem Boden auf einen harten Gegenstand, beispielsweise einen Stein, auftreffen. Ferner besteht Bedarf darin, möglichst leichte Maschinen herzustellen.

Aufgabe der vorliegenden Erfindung ist es daher, eine Bodenbearbeitungsvorrichtung und ein Verfahren zum Bearbeiten einer Bodenfläche zu schaffen, bei der bzw. bei dem die Bodenbearbeitungsvorrichtung vor Beschädigung geschützt ist, wenn das mindestens eine Stechwerkzeug auf einen harten Gegenstand im Boden trifft, wobei die Bodenbearbeitungsvorrichtung auf einfache Art und Weise und kostengünstig herzustellen ist.

Zur Lösung dieser Aufgabe dienen die Merkmale der Ansprüche 1 und 12.

Die Erfindung sieht in vorteilhafter Weise vor, dass in der Rückholeinrichtung zusätzlich zu dem Rückholelement eine Federeinrichtung angeordnet ist, die ein Verschwenken des Stechwerkzeugs in die zweite Schwenkrichtung über die Ausgangslage hinaus erlaubt, so dass das Stechwerkzeug beim Auftreffen auf einen harten Gegenstand im Boden durch Verschwenken des Stechwerkzeugs in die zweite Schwenkrichtung über die Ausgangslage hinaus verschwenkbar ist, wobei die Federkraft der Federeinrichtung derart gewählt ist, dass die Federeinrichtung die Bewegung des Stechwerkzeugs über die Ausgangslage hinaus erst erlaubt, wenn eine Kraft auf das Stechwerkzeug ausgeübt wird, die eine vorbestimmte Kraft überschreitet.

Dies hat den Vorteil, dass das Stechwerkzeug auch in Richtung der zweiten Schwenkrichtung dem harten Gegenstand im Boden ausweichen kann, obwohl sich das Stechwerkzeug bereits in der Ausgangslage befindet. Auf diese Weise kann verhindert werden, dass die Stechwerkzeuge beschädigt werden. Dadurch, dass die Federeinrichtung, die das Verschwenken des Stechwerkzeugs in die zweite Schwenkrichtung über die Ausgangslage hinaus erlaubt, in der Rückholeinrichtung angeordnet ist, können bisher verwendete Bodenbearbeitungsvorrichtungen leicht umgerüstet werden, indem eine bisher verwendete Rückholeinrichtungen durch die erfindungsgemäße Rückholeinrichtung ausgetauscht wird.

Ferner wird die erfindungsgemäße Bodenbearbeitungsvorrichtung nur unwesentlich schwerer als eine bisher bekannte Bodenbearbeitungsvorrichtung.

Das Stechwerkzeug kann beim Verschwenken in die zweite Schwenkrichtung über die Ausgangslage hinaus entgegen der Federkraft der Federeinrichtung verschwenkbar sein.

Das hat den Vorteil, dass sobald das Hindernis im Boden wegfällt und das Stechwerkzeug aus dem Boden wieder austritt, das Stechwerkzeug wieder in die Ausgangslage aufgrund der Federkraft der Federeinrichtung verschwenkt wird. Auf diese Weise muss der Betrieb der Bodenbearbeitungsvorrichtung nicht unterbrochen werden, wenn ein Stechwerkzeug auf einen harten Gegenstand trifft.

Die Federeinrichtung wird bei normalem Betrieb nicht betätigt. Erst wenn das Stechwerkzeug auf einen harten Gegenstand trifft und sich das Stechwerkzeug bereits in der Ausgangslage befindet, kann das Stechwerkzeug weiter in Richtung der zweiten Schwenkrichtung über die Ausgangslage hinaus verschwenken und dabei die Federeinrichtung betätigen.

Die Federkraft der Federeinrichtung kann einstellbar sein. Es kann beispielsweise eine andere Feder gewählt werden oder die Feder kann unterschiedlich vorgespant werden.

Die Rückholeinrichtung kann einen Anschlag aufweisen, der das Verschwenken des Stechwerkzeugs in die zweite Schwenkrichtung bei Erreichen der Ausgangslage begrenzt bzw. bei normalem Betrieb begrenzt.

Das Rückholelement kann eine Feder sein, vorzugsweise eine Druckfeder.

Die Rückholeinrichtung kann eine Kolbenzylindereinheit sein. Diese Kolbenzylindereinheit kann teleskopierbar sein.

Die als Kolbenzylindereinheit ausgebildete Rückholeinrichtung kann im Wesentlichen parallel zu dem Tragarm verlaufen. Auf diese Weise bilden die als Kolbenzylindereinheit ausgebildete Rückholeinrichtung und der Tragarm eine Art Parallelogramm.

Die Federeinrichtung kann eine Druckfeder sein.

Die Rückholeinrichtung kann über eine Verstelleinrichtung mit dem Maschinenrahmen gekoppelt sein, wobei mittels der Verstelleinrichtung der Einstechwinkel in der Ausgangslage des Stechwerkzeugs einstellbar ist.

Es kann zumindest ein Werkzeughalter für das mindestens eine Stechwerkzeug vorgesehen sein, der um die erste Schwenkachse in dem von dem Antrieb auf- und abbewegbaren Tragarm gelagert ist.

Es können mehrere Stechwerkzeuge an dem Werkzeughalter befestigt sein.

Es können mehrere Werkzeughalter nebeneinander angeordnet sein, an denen jeweils mehrere Stechwerkzeuge befestigt sind, wobei jeweils eine Rückholeinrichtung pro Werkzeughalter gekoppelt ist vorgesehen ist und mit dem jeweiligen Werkzeughalter verbunden ist.

Gemäß der vorliegenden Erfindung kann ferner ein Verfahren zum Bearbeiten eines Bodens vorgesehen sein, das die folgenden Schritte aufweist:
- Ziehen oder Fahren einer Bodenbearbeitungsvorrichtung über eine Bodenfläche,
- Einstechen und Herausziehen von mit einem Maschinenrahmen gekoppelten, mindestens einen Stechwerkzeug in den Boden,
- wobei sich das Stechwerkzeug vor dem Einstechen in den Boden in einer Ausgangslage unter einem vorgegebenen Einstechwinkel befindet und im Boden aufgrund der Bewegung des Maschinenrahmens in Fahrtrichtung eine die Auf- und Abbewegung überlagernde Schwenkbewegung um eine erste Schwenkachse in Richtung einer ersten Schwenkrichtung ausführt,
- wobei das Stechwerkzeug nach dem Austritt aus dem Boden mittels zumindest eines Rückholelements, das in zumindest einer Rückholeinrichtung angeordnet ist, zurück in die Ausgangslage durch Verschwenken des Stechwerkzeugs in eine der ersten Schwenkrichtung entgegengesetzte zweite Schwenkrichtung überführt wird, wobei die Rückholeinrichtung an einem ersten Ende mit dem Maschinenrahmen gekoppelt ist und an einem zweiten Ende mit dem Stechwerkzeug gekoppelt ist, wobei
- das Stechwerkzeug kann beim Verschwenken in die zweite Schwenkrichtung über die Ausgangslage hinaus entgegen der Federkraft der Federeinrichtung erst verschwenkt werden, wenn eine Kraft auf das Stechwerkzeug ausgeübt wird, die eine vorbestimmte Kraft überschreitet.

Bei einem solchen Verfahren ist in vorteilshafter Weise vorgesehen, dass eine in der Rückholeinrichtung angeordnete Federeinrichtung ein Verschwenken des Stechwerkzeugs beim Auftreffen auf einen harten Gegenstand im Boden in die zweite Schwenkrichtung über die Ausgangslage hinaus erlaubt.

Im Folgenden wird unter Bezugnahme auf die Zeichnung ein Ausführungsbeispiel der Erfindung näher erläutert.

Es zeigen schematisch:
- Fig. 1: eine Bodenbearbeitungsvorrichtung in der Seitenansicht vor dem Einstechen des Stechwerkzeugs,
- Fig. 2: die Bodenbearbeitungsvorrichtung aus Fig. 1 mit eingestochenem Stechwerkzeug,
- Fig. 3: die Bodenbearbeitungsvorrichtung aus den Fign. 1 und 2 mit verschwenktem Stechwerkzeug,
- Fig. 4: die Bodenbearbeitungsvorrichtung aus den Fign. 1 bis 3 beim Auftreffen des Stechwerkzeugs auf einen harten Gegenstand,
- Fig. 5: eine geschnittene Darstellung der Rückholeinrichtung in der Ausgangslage,
- Fig. 6: eine geschnittene Darstellung der Rückholeinrichtung bei verschwenktem Stechwerkzeug.
- Fig. 7: eine geschnittene Darstellung der Rückholeinrichtung bei dem das Stechwerkzeug über die Ausgangslage hinaus in Richtung der zweiten Schwenkrichtung verschwenkt worden ist.

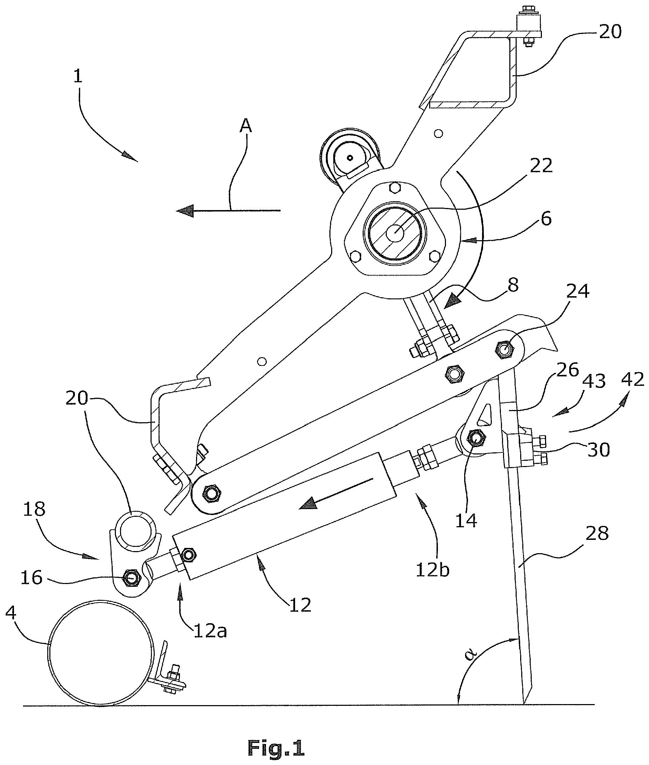

Fig. 1 zeigt eine Bodenbearbeitungsvorrichtung 1 in der Seitenansicht. Die Bodenbearbeitungsvorrichtung 1 weist Räder 4 und eine nicht dargestellte Ankoppeleinrichtung auf, die mit dem Maschinenrahmen 20 verbunden ist. Mittels der Ankoppelvorrichtung kann die Bodenbearbeitungsvorrichtung 1 mit einem Zugfahrzeug gekoppelt werden und mit dem Zugfahrzeug gezogen werden. Alternativ kann die Bodenbearbeitungsvorrichtung 1 auch selbstfahrend sein.

Die Bodenbearbeitungsvorrichtung 1 weist einen Maschinenrahmen 20 auf. Ferner weist die Bodenbearbeitungsvorrichtung 1 einen Antrieb 6, sowie mindestens einen von dem Antrieb 6 auf- und abbewegbaren an dem Maschinenrahmen 20 schwenkbar gelagerten Tragarm 10. Der Tragarm 10 ist über die Schubstange 8 mittels des Antriebs 6 antreibbar. Der Tragarm 10 ist an einem ersten Ende um eine Schwenkachse 42 an dem Maschinenrahmen 20 schwenkbar gelagert. Die Schubstange 8 ist über ein Gelenk 44 mit dem Tragarm 10 verbunden. Der Antrieb 6 ist bei dem dargestellten Ausführungsbeispiel ein Kurbelantrieb. Der Antrieb 6 treibt die Schubstange 8 an, die wiederum den Tragarm 10 antreibt, so dass dieser auf- und abbewegt wird und dabei um die Schwenkachse 42 verschwenkt.

Am zweiten Ende des Tragsarms 10 ist um eine erste Schwenkachse 24 ein Werkzeughalter 26 schwenkbar befestigt. Mit dem Werkzeughalter 26 ist mindestens ein Stechwerkzeug 28, vorzugsweise mehrere Stechwerkzeuge 28, verbunden. Die Stechwerkzeuge 28 können mittels der Befestigungseinrichtung 30 mit dem Werkzeughalter 26 verbunden werden. Das mindestens eine Stechwerkzeug 28 ist somit mit dem Tragarm 10 gekoppelt und kann relativ zu dem Tragarm 10 verschwenken. Ferner kann das mindestens eine Stechwerkzeug 28 mittels des Tragarms 10 auf und ab bewegt werden, wobei das Stechwerkzeug 28 in den Boden 2 einstechbar und wieder herausziehbar ist.

Ferner weist die Bodenbearbeitungsvorrichtung 1 mindestens eine Rückholeinrichtung 12 auf, die an einem ersten Ende 12a mit dem Maschinenrahmen 20 gekoppelt ist und an einem zweiten Ende 12b mit dem Stechwerkzeug 28 gekoppelt ist. Im dargestellten Ausführungsbeispiel ist die Rückholeinrichtung 12 an dem ersten Ende 12a über eine Verstelleinrichtung 18 mit dem Maschinenrahmen 20 gekoppelt, wobei die Rückholeinrichtung 12 mit der Verstelleinrichtung über die Schwenkachse 16 verschwenken gekoppelt ist.

An dem zweiten Ende 12b ist die Rückholeinrichtung 12 über eine Schwenkachse 14 mit dem Werkzeughalter 26 verbunden und somit mit dem mindestens einen Stechwerkzeug 28 gekoppelt.

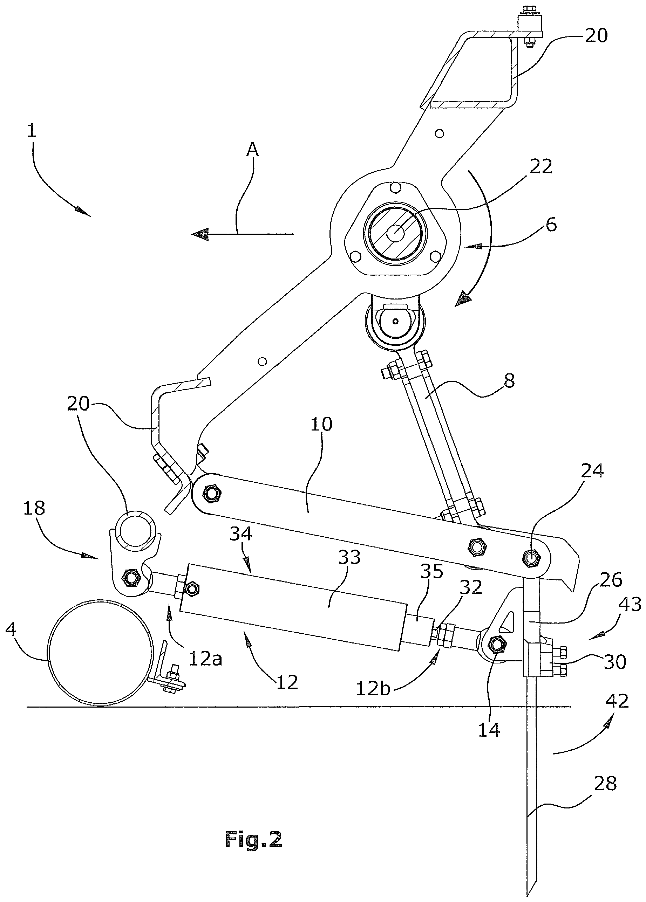

In Fig. 1 ist ein Betriebszustand dargestellt, bei dem sich das Stechwerkzeug 28 kurz vor dem Einstechen in den Boden befindet. Vor dem Einstechen in den Boden befindet sich das Stechwerkzeug 28 in einer Ausgangslage unter einem vorgegebenen Einstechwinkel a. Wenn der Tragarm 10 mittels des Antriebs 6 herabgeschwenkt wird, sticht das Stechwerkzeug 28 in den Boden ein. Dieser Zustand ist in Fig. 2 dargestellt. Im Boden 2 führt das Stechwerkzeug 28 aufgrund der Bewegung des Maschinenrahmens 20 in Fahrtrichtung A eine die Auf- und Abbewegung überlagernde Schwenkbewegung um die erste Schwenkachse 24 in Richtung einer ersten Schwenkrichtung 42 aus.

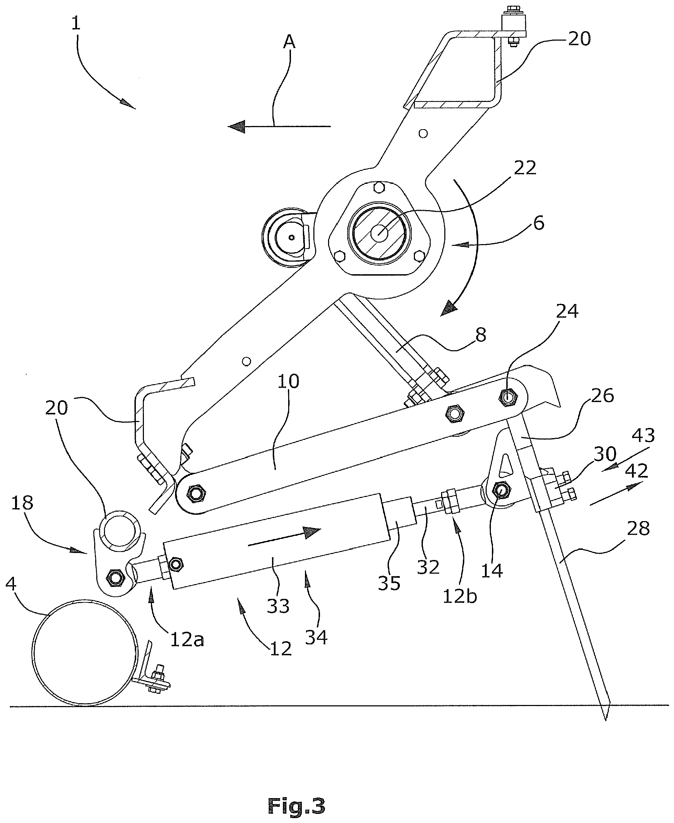

In Fig. 3 ist der Zustand dargestellt, bei dem das Stechwerkzeug Richtung der ersten Schwenkrichtung 42 verschwenkt worden ist und mittels des Antriebs 6 wieder heraufbewegt worden ist.

Die Rückholeinrichtung 12 weist zumindest ein Rückholelement auf, das das Stechwerkzeug 28 nach dem Austritt aus dem Boden 2 in die Ausgangslage durch Verschwenken des Stechwerkzeugs um die erste Schwenkachse 24 in eine der ersten Schwenkrichtung 42 entgegengesetzte zweite Schwenkrichtung 43 überführt.

Die Rückholeinrichtung 12 kann dabei in dem dargestellten Ausführungsbeispiel eine Kolbenzylindereinheit sein. Dabei weist die Rückholeinrichtung 12 eine Kolbenstange 32 auf, die beim Verschwenken in die erste Schwenkrichtung 42 aus der Zylindereinheit 34 austritt. Die Rückholeinrichtung 12 ist somit längenveränderlich. Ferner ist die Rückholeinrichtung 12 vorzugsweise im Wesentlichen parallel zu dem Tragarm 10 angeordnet, wodurch die Rückholeinrichtung 12 und der Tragarm 10 eine parallelogrammartige Anordnung aufweisen.

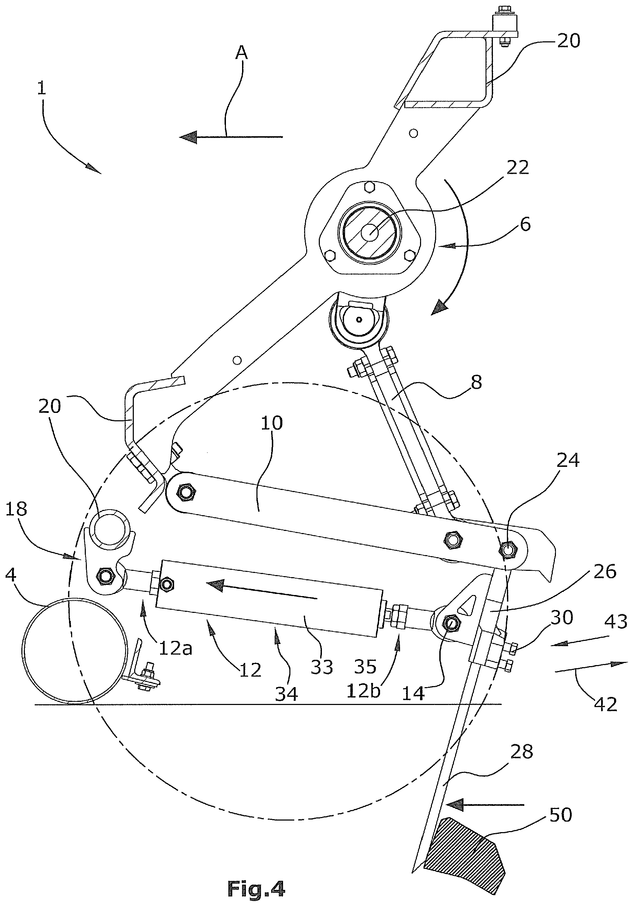

Die Rückholeinrichtung 12 kann zusätzlich zu dem Rückholelement eine Federeinrichtung aufweisen, die ein Verschwenken des Stechwerkzeugs 28 in die zweite Schwenkrichtung 43 über die Ausgangslage hinaus erlaubt, so dass das Stechwerkzeug beim Auftreffen auf einen harten Gegenstand im Boden 2, wie beispielsweise einem Stein 50, durch Verschwenken des Stechwerkzeugs 28 in die zweite Schwenkrichtung 43 über die Ausgangslage hinaus verschwenkbar ist. In Fig. 4 ist ein Zustand dargestellt, bei dem das Stechwerkzeug 28 auf einen harten Gegenstand, wie einem Stein 50, trifft. Das Stechwerkzeug 28 kann nun weiter in die Richtung der zweiten Schwenkrichtung 43 verschwenken, wodurch die Kolbenstange 32 weiter in die Zylindereinheit 34 eingeführt wird. Das Stechwerkzeug 28 kann somit, wie in Fig. 4 dargestellt, dem harten Gegenstand 50 ausweichen.

Sobald das Hindernis im Boden 2 wegfällt und das Stechwerkzeug 28 wieder aus dem Boden 2 herausgezogen worden ist, kann die Federeinrichtung 52 das Stechwerkzeug wieder zurück in die Ausgangslage bewegen.

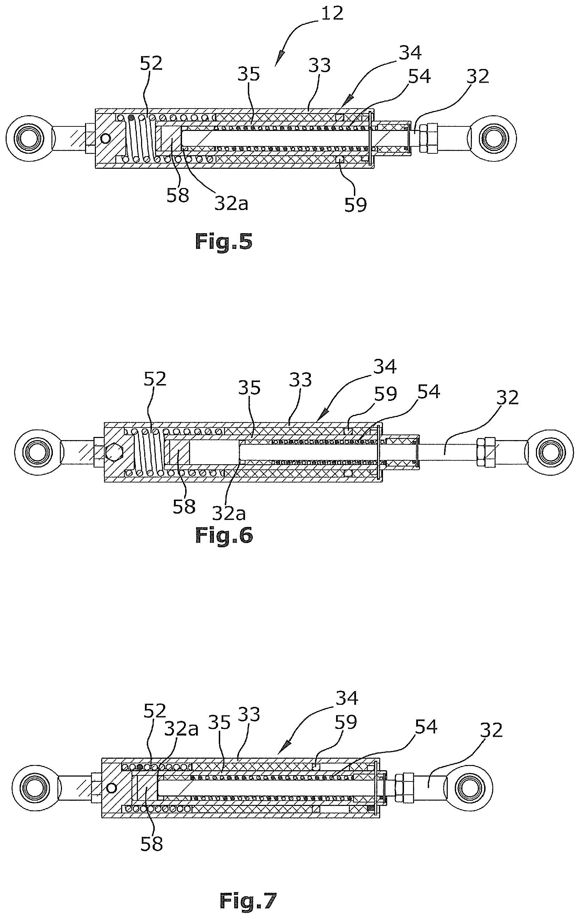

In den Fign. 5 - 7 ist die Rückholeinrichtung 12 näher dargestellt. Wie den Fign. 5 - 7 zu entnehmen ist, weist die Rückholeinrichtung 12 ein Rückholelement 54 auf, mittels dessen das Stechwerkzeug nach dem Austritt aus dem Boden zurück in die Ausgangslage durch Verschwenken des Stechwerkzeugs 28 in die der ersten Schwenkrichtung entgegengesetzten zweiten Schwenkrichtung 43 überführt wird. Im dargestellten Ausführungsbeispiel ist das Rückholelement 54 eine Feder, vorzugsweise eine Druckfeder.

Die dargestellte Rückholeinrichtung 12 ist eine Kolbenzylindereinheit. Diese besteht aus einer Kolbenstange 32 und einer Zylindereinheit 34. Die Zylindereinheit 34 weist einen ersten äußeren Zylinder 33 und einen inneren Zylinder 35 auf. Das Rückholelement 54 ist in dem inneren Zylinder 35 angeordnet. Die Kolbenstange 32 kann innerhalb des inneren Zylinders 35 hin- und herbewegt werden. In Fig. 5 ist die Kolbenzylindereinheit in der Ausgangslage dargestellt. In Fig. 6 ist die Kolbenzylindereinheit mit herausgezogener Kolbenstange 32 dargestellt. Beim Herausziehen der Kolbenstange 32 aus der Zylindereinheit 34 wird das Rückholelement 54, das aus einer Druckfeder besteht, innerhalb des inneren Zylinders 35 zusammengedrückt. Somit wird die Kolbenstange 32 entgegen der Federkraft des Rückholelements 54 aus dem inneren Zylinder 35 und somit aus der Zylindereinheit 34 herausgezogen und dies ermöglicht es dem Stechwerkzeug 28 bei der Fortbewegung in Fahrtrichtung A in Richtung der ersten Schwenkrichtung 42 zu verschwenken.

Sobald das Stechwerkzeug 28 bei normalem Betrieb aus dem Boden herausgezogen wird, wird aufgrund der Federkraft des Rückholelements 54 die Kolbenstange 32 wieder im die Zylindereinheit 34 und somit in den inneren Zylinder 35 eingeführt, was dazu führt, dass das Stechwerkzeug 28 in Richtung der zweiten Schwenkrichtung 43 um die Schwenkachse 24 wieder zurück in die Ausgangslage verschwenkt. Beim Erreichen der Ausgangslage trifft das freie Ende 32a der Kolbenstange 32 auf das Anschlagselement 58 und die Bewegung der Kolbenstange 32 wird begrenzt.

Mit dem inneren Zylinder 35 ist die Federeinrichtung 52 gekoppelt. Die Federeinrichtung 52 ist mit einer bestimmten Vorspannkraft vorgespannt. Erst wenn eine vorbestimmte Kraft auf das Stechwerkzeug 28 einwirkt und das Stechwerkzeug in Richtung zweiter Schwenkachse 42 verschwenkt und die Kolbenstange am Anschlag 58 anliegt, wird die Federeinrichtung 52 zusammengedrückt. Dies bedeutet, dass die Federkraft der Federeinrichtung 52 derart gewählt ist, dass die Federeinrichtung 52 die Bewegung des Stechwerkzeugs 28 über die Ausgangslage hinaus erst erlaubt, wenn eine Kraft auf das Stechwerkzeug 28 ausgeübt wird, die eine vorbestimmte Kraft überschreitet. Die Vorspannkraft und damit die Federkraft der Federeinrichtung kann einstellbar sein. Wenn das Stechwerkzeug 28 somit auf einen harten Gegenstand trifft, kann die Kolbenstange 32 weiter in die Zylindereinheit 34 entgegen der Federkraft der Federeinrichtung 52 eingeführt werden, wobei der innere Zylinder 35 in dem äußeren Zylinder 33 in Richtung der zweiten Schwenkrichtung 43 bewegt wird. Dabei drückt der Vorsprung 59 des inneren Zylinders 35 gegen die Feder 52.

Das Rückholelement 54 und die Federeinrichtung 52 wirken somit auf das Stechwerkzeug 28 in unterschiedliche Richtungen. Das Rückholelement 54 bewirkt, dass sich das Stechwerkzeug 28 nach Verschwenken im Boden und Austritt aus dem Boden wieder in die zweite Schwenkrichtung 43 in Richtung Ausganglage bewegt. Die Federeinrichtung 52 bewirkt, nachdem sich das Stechwerkzeug aufgrund des Auftreffens auf einen harten Gegenstand im Boden über die Ausgangslage hinaus in die zweite Schwenkrichtung 43 verschwenkt hat, dass das Stechwerkzeug 28 sich wieder in Richtung der ersten Schwenkrichtung 42 zurück in die Ausgangslage bewegt, sobald das Stechwerkzeug 28 aus dem Boden 2 ausgetreten ist.

In dem gezeigten Ausführungsbeispiel sind jeweils nur ein Stechwerkzeug und ein Werkzeughalter an einem Tragarm mit einer dazugehörigen Rückholeinrichtung dargestellt. Bei einer Bodenbearbeitungsvorrichtung können jedoch mehrere Tragarme nebeneinander angeordnet sein, die jeweils mit einem Werkzeughalter verbunden sind, wobei jedem Werkzeughalter eine Rückholeinrichtung zugeordnet ist. Mit jedem Werkzeughalter können ein oder mehrere Stechwerkzeuge verbunden sein. Die vorliegende Erfindung hat den Vorteil, dass, wenn nur ein Stechwerkzeug eines Werkzeughalters auf einen harten Gegenstand trifft, nur die dem Werkzeughalter zugeordneten Stechwerkzeugen aufgrund der Federeinrichtung in der Rückholeinrichtung dem Gegenstand ausweichen. Die übrigen Stechwerkzeuge an den anderen Werkzeughaltern können normal weiter betrieben werden.

Ferner ist in dem dargestellten Ausführungsbeispiel eine Verstelleinrichtung 18 dargestellt, die in Bezug zu dem Maschinenrahmen 20 verschwenkbar ist. Auf diese Weise kann die Schwenkachse 16 in Bezug zu dem Maschinenrahmen 20 verschwenkt werden, wodurch die Rückstelleinrichtung 12 und damit der Werkzeughalter 26 und die Stechwerkzeuge 28 verstellt werden können. Auf diese Weise kann der Einstechwinkel α in der Ausgangslage eingestellt werden. Die Verstelleinrichtung 18 kann zentral für alle nebeneinander angeordneten Einheiten aus Werkzeughalter, Stechwerkzeugen und Rückstelleinrichtung gleichzeitig verstellt werden. Alternativ kann die Rückholeinrichtung auch direkt schwenkbar mit dem Maschinenrahmen verbunden sein.

## Patentansprüche

1. Fahrbare Bodenbearbeitungsvorrichtung (1), mit
- einem Maschinenrahmen (20),
- einem Antrieb (6),
- mindestens einem von dem Antrieb (6) auf und abbewegbaren und an dem Maschinenrahmen (20) schwenkbar gelagerten Tragarm (10),
- mindestens einem Stechwerkzeug (28), das um eine erste Schwenkachse (24) relativ zu dem Tragarm (10) schwenkbar ist und mittels des Tragarms (10) auf- und abbewegbar ist, wobei das Stechwerkzeug (28) in den Boden (2) einstechbar und wieder herausziehbar ist,
- wobei sich das Stechwerkzeug (28) vor dem Einstechen in den Boden (2) in einer Ausgangslage unter einem vorgegebenen Einstechwinkel (α) befindet und im Boden (2) aufgrund der Bewegung des Maschinenrahmens (20) in Fahrtrichtung eine die Auf- und Abbewegung überlagernde Schwenkbewegung um die erste Schwenkachse (24) in Richtung einer ersten Schwenkrichtung (42) ausführt,
- mindestens einer Rückholeinrichtung, die an einem ersten Ende (12a) mit dem Maschinenrahmen (20) gekoppelt ist und an einem zweiten Ende (12b) mit dem Stechwerkzeug (28) gekoppelt ist, wobei die Rückholeinrichtung (12) ein Rückholelement (54) aufweist, das das Stechwerkzeug (28) nach dem Austritt aus dem Boden (2) zurück in die Ausgangslage durch Verschwenken des Stechwerkzeug (28) in eine der ersten Schwenkrichtung (42) entgegengesetzte zweite Schwenkrichtung (43) überführt,
**dadurch gekennzeichnet,**
**dass** in der Rückholeinrichtung (12) zusätzlich zu dem Rückholelement (54) eine Federeinrichtung (52) angeordnet ist, die ein Verschwenken des Stechwerkzeugs (28) in die zweite Schwenkrichtung (43) über die Ausganglage hinaus erlaubt, so dass das Stechwerkzeug (28) beim Auftreffen auf einen harten Gegenstand (50) im Boden (2) durch Verschwenken des Stechwerkzeugs in die zweite Schwenkrichtung (43) über die Ausgangslage hinaus verschwenkbar ist, wobei die Federkraft der Federeinrichtung (52) derart gewählt ist, dass die Federeinrichtung (52) die Bewegung des Stechwerkzeug (28) über die Ausgangslage hinaus erst erlaubt, wenn eine Kraft auf das Stechwerkzeug (28) ausgeübt wird, die eine vorbestimmte Kraft überschreitet..

2. Bodenbearbeitungsvorrichtung (1) nach Anspruch 1, **dadurch gekennzeichnet, dass** das Stechwerkzeug (28) beim Verschwenken in die zweite Schwenkrichtung (43) über die Ausgangslage hinaus entgegen der Federkraft der Federeinrichtung (52) verwenkbar ist.

3. Bodenbearbeitungsvorrichtung (1) nach einem der Ansprüche 1 bis 2, **dadurch gekennzeichnet, dass** die Rückholeinrichtung (12) einen Anschlag (58) aufweist, der das Verschwenken des Stechwerkzeugs in die zweite Schwenkrichtung (43) bei Erreichen der Ausgangslage begrenzt.

4. Bodenbearbeitungsvorrichtung (1) nach einem der Ansprüche 1 bis 3, **dadurch gekennzeichnet, dass** das Rückholelement (54) eine Feder, vorzugsweise eine Druckfeder, ist.

5. Bodenbearbeitungsvorrichtung (1) nach einem der Ansprüche 1 bis 4, **dadurch gekennzeichnet, dass** die Rückholeinrichtung (12) eine Kolbenzylindereinheit ist.

6. Bodenbearbeitungsvorrichtung (1) nach einem der Ansprüche 1 bis 5, **dadurch gekennzeichnet, dass** die als Kolbenzylindereinheit ausgebildete Rückholeinrichtung (12) im Wesentlichen parallel zu dem Tragarm (10) verläuft.

7. Bodenbearbeitungsvorrichtung (1) nach einem der Ansprüche 1 bis 6, **dadurch gekennzeichnet, dass** die Federeinrichtung (52) eine Druckfeder ist.

8. Bodenbearbeitungsvorrichtung (1) nach einem der Ansprüche 1 bis 7, **dadurch gekennzeichnet, dass** die Rückholeinrichtung (12) über eine Verstelleinrichtung (18) mit dem Maschinenrahmen (20) gekoppelt ist, wobei mittels der Verstelleinrichtung (18) der Einstechwinkel (α) in der Ausgangslage des Stechwerkzeugs (28) einstellbar ist.

9. Bodenbearbeitungsvorrichtung (1) nach einem der Ansprüche 1 bis 8, **dadurch gekennzeichnet, dass** zumindest ein Werkzeughalter (26) für das mindestens eine Stechwerkzeug (28) vorgesehen ist, der um die erste Schwenkachse (24) in dem von dem Antrieb (6) auf- und abbewegbaren Tragarm (10) gelagert ist.

10. Bodenbearbeitungsvorrichtung (1) nach Anspruch 9, **dadurch gekennzeichnet, dass** mehrere Stechwerkzeuge (28) an dem Werkzeughalter (26) befestigt sind.

11. Bodenbearbeitungsvorrichtung (1) nach Anspruch 9 oder 10, **dadurch gekennzeichnet, dass** mehrere Werkzeughalter (26) nebeneinander angeordnet sind, an denen jeweils mehrere Stechwerkzeuge (28) befestigt sind, wobei jeweils eine Rückholeinrichtung (12) mit dem Werkzeughalter (26) gekoppelt ist.

12. Verfahren zum Bearbeiten eines Bodens (2) durch
- Ziehen oder Fahren einer Bodenbearbeitungsvorrichtung (1) über einen Bodenfläche (2),
- Einstechen und Herausziehen von mit einem Maschinenrahmen (20) gekoppelten mindestens einem Stechwerkzeug (28) in den Boden (2),
- wobei sich das Stechwerkzeug (28) vor dem Einstechen in den Boden (2) in einer Ausgangslage unter einem vorgegebenen Einstechwinkel (α) befindet und im Boden (2) aufgrund der Bewegung des Maschinenrahmens (20) in Fahrtrichtung eine die Auf- und Abbewegung überlagernde Schwenkbewegung um eine erste Schwenkachse (24) in Richtung einer ersten Schwenkrichtung (42) ausführt,
- wobei das Stechwerkzeug (28) nach dem Austritt aus dem Boden (2) mittels zumindest eines Rückholelements (54), das in zumindest einer Rückholeinrichtung (12) angeordnet ist, zurück in die Ausgangslage durch Verschwenken des Stechwerkzeug (28) in eine der ersten Schwenkrichtung (42) entgegengesetzte zweite Schwenkrichtung (43) überführt wird, wobei die Rückholeinrichtung (12) an einem ersten Ende (12a) mit dem Maschinenrahmen (20) gekoppelt ist und an einem zweiten Ende (12b) mit dem Stechwerkzeug (28) gekoppelt ist,
**dadurch gekennzeichnet,**
**dass** eine in der Rückholeinrichtung (12) angeordnete Federeinrichtung (52) ein Verschwenken des Stechwerkzeugs beim Auftreffen auf einen harten Gegenstand (50) im Boden (2) in die zweite Schwenkrichtung (43) über die Ausgangslage hinaus erlaubt, wobei das Stechwerkzeug (28) über die Ausgangslage hinaus verschwenkt wird, wenn eine Kraft auf das Stechwerkzeug (28) ausgeübt wird, die eine vorbestimmte Kraft überschreitet..

13. Verfahren nach Anspruch 12, **dadurch gekennzeichnet, dass** das Stechwerkzeug (28) beim Verschwenken in die zweite Schwenkrichtung (43) über die Ausgangslage hinaus entgegen der Federkraft der Federeinrichtung (52) verwenkt wird.

## Claims

1. Mobile soil working device (1) comprising:
- machine frame (20),
- a drive (6)
- at least one support arm (10) adapted to be moved up and down by the drive (6) and pivotably supported at the machine frame (20),
- at least one insertion tool (28) pivotable about a first pivot axis (24) relative to the support arm (10) and movable up and down by the support arm (10), the insertion tool (28) being adapted to be inserted into the soil (2) and be pulled from the soil,
- wherein, prior to insertion into the soil (2), the insertion tool (28) is in an initial position under a predefined insertion angle (α) and carries out a pivot movement, which is superimposed over the up-and-down movement, about the first pivot axis (24) in a first pivoting direction (42) in the soil (2) on the basis of the movement of the machine frame (20) in the direction of travel,
- at least one returning means which is coupled to the machine frame (20) at a first end (12a) and to the insertion tool (28) at a second end (12b), the returning device (12) having a returning element (54) which moves the insertion tool (28) back into the initial position by pivoting the insertion tool (28) in a second pivoting direction (43) opposite the first pivoting direction (42) after the insertion tool exits the soil (2),
**characterized in that**
a spring device (52) is arranged in the returning means (12) in addition to the returning element (54), said spring device allowing the insertion tool (28) to be pivoted in the second pivoting direction (43) beyond the initial position such that the insertion tool (28) is pivoted in the second pivoting direction (43) beyond the initial position upon hitting a hard object (50) in the soil (2), wherein the spring force of the spring means (52) is selected such that the spring means (52) allows a movement of the insertion tool (28) beyond the initial position only when a force is exerted on the insertion tool (28) that exceeds a predetermined force.

2. Soil working device (1) of claim 1, **characterized in that** the insertion tool (28) is pivotable against the spring force of the spring means (52) when being pivoted in the second pivoting direction (43) beyond the initial position.

3. Soil working device (1) of one of claims 1 to 2, **characterized in that** the returning means (12) has a stop (58) that limits the pivoting of the insertion tool in the second pivoting direction (43) when the initial position is reached.

4. Soil working device (1) of one of claims 1 to 3, **characterized in that** the returning element (54) is a spring, preferably a compression spring.

5. Soil working device (1) of one of claims 1 to 4, **characterized in that** the returning means (12) is a piston-cylinder unit.

6. Soil working device (1) of one of claims 1 to 5, **characterized in that** the returning means (12) designed as a piston-cylinder unit extends substantially parallel to the support arm (10).

7. Soil working device (1) of one of claims 1 to 6, **characterized in that** the spring means (52) is a compression spring.

8. Soil working device (1) of one of claims 1 to 7, **characterized in that** the returning means (12) is coupled to the machine frame (20) through an adjustment means (18), wherein, by means of the adjustment means (18), the insertion angle (α) is adjustable in the initial position of the insertion tool (28).

9. Soil working device (1) of one of claims 1 to 8, **characterized in that** at least one tool holder (26) is provided for the at least one insertion tool (28), said tool holder being supported about the first pivot axis (24) in the support arm (10) adapted to be moved up and down by the drive (6).

10. Soil working device (1) of claim 9, **characterized in that** a plurality of insertion tools (28) are fastened on the tool holder (26).

11. Soil working device (1) of claim 9 or 10, **characterized in that** a plurality of tool holders (26) are arranged side by side, each having a plurality of insertion tools (28) fastened thereon, wherein one returning means (12) is coupled to the tool holder (26), respectively.

12. Method for working a soil (2) by:
- pulling or driving a soil working device (1) over a soil surface (2),
- inserting at least one insertion tool (28), coupled to a machine frame (20), into the soil (2) and pulling it out of the soil,
- wherein, prior to insertion, the insertion tool (28) is in an initial position under a predetermined insertion angle (α) and, due to the movement of the machine frame (20) in the traveling direction, performs a pivot movement in the soil (2) about a first pivot axis (24) in a first pivoting direction (42), the pivot movement superposing the upward and downward movement,
- wherein the insertion tool (28), after having left the soil (2), is returned to the initial position by at least one returning element (54) arranged in at least one returning means (12), by pivoting the insertion tool (28) in a second pivoting direction (43) opposite to the first pivoting direction (42), wherein the returning means (12) is coupled to the machine frame (20) at a first end (12a) and is coupled to the insertion tool (28) at a second end (12b).
**characterized in that**
a spring means (52) arranged in the returning means (12) allows a pivoting of the insertion tool beyond the initial position in the second pivoting direction (43), when the tool hits a hard object (50) in the soil (2), wherein the insertion tool (28) is pivoted beyond the initial position when a force is exerted on the insertion tool (28) that exceeds a predetermined force.

13. Method of claim 12, **characterized in that** the insertion tool (28) is pivoted against the spring force of the spring means (52) when being pivoted in the second pivoting direction (43) beyond the initial position.

## Revendications

1. Dispositif de traitement des sols (1) mobile, doté
- d'un châssis de machine (20),
- d'un entraînement (6),
- d'au moins un bras de support (10) déplaçable en va-et-vient par l'entraînement (6) et monté pivotant sur le châssis de machine (20),
- d'au moins un outil perforateur (28), pouvant pivoter autour d'un premier axe de pivotement (24) relativement au bras de support (10) et déplaçable en va-et-vient au moyen du bras de support (10), dans lequel l'outil perforateur (28) peut pénétrer dans le sol (2) et s'en dégager,
- dans lequel l'outil perforateur (28) se trouve, avant pénétration dans le sol (2) dans une position sortie avec un angle de pénétration prédéfini (α) et effectue dans le sol (2) en raison du mouvement du châssis de machine (20) dans le sens de la marche, un mouvement de pivotement superposant le va-et-vient autour du premier axe de pivotement (24) dans la direction d'une première direction de pivotement (42),
- au moins un dispositif de rappel, couplé avec le châssis de machine (20) à une première extrémité (12a) et avec l'outil perforateur (28) à une deuxième extrémité (12b), dans lequel le dispositif de rappel (12) comporte un élément de rappel (54), qui ramène l'outil perforateur (28) à la position sortie après sa sortie du sol (2) par pivotement de l'outil perforateur (28) dans une deuxième direction de pivotement (43) opposée à la première direction de pivot (42),
- **caractérisé en ce que** dans le dispositif de rappel (12) est agencé en sus de l'élément de rappel (54) un dispositif de ressort (52), permettant un pivotement de l'outil perforateur (28) dans la deuxième direction de pivotement (43) au-delà de la position sortie, de sorte que l'outil perforateur (28) peut pivoter hors du sol au-delà de la position sortie par pivotement de l'outil dans la deuxième direction de pivotement (43) lorsqu'il heurte un objet dur (50) dans le sol (2),
- dans lequel la force de ressort du dispositif de ressort (52) est choisie de façon à ce que le dispositif de ressort (52) permette le mouvement de sortie de l'outil perforateur (28) au-delà de la position sortie, lorsqu'une force est exercée sur l'outil perforateur (28) dépassant une force prédéfinie.

2. Dispositif de traitement des sols (1) selon la revendication 1, **caractérisé en ce que** l'outil perforateur (28) peut pivoter hors du sol contre la force de ressort de l'élément (52) de ressort au-delà de la position de sortie lors d'un pivotement dans la deuxième direction de pivotement (43).

3. Dispositif de traitement des sols (1) selon l'une des revendications 1 à 2, **caractérisé en ce que** le dispositif de rappel (12) comprend une butée (58), laquelle limite le pivotement de l'outil perforateur dans la deuxième direction de pivotement (43) lorsque la position sortie est atteinte.

4. Dispositif de traitement des sols (1) selon l'une des revendications 1 à 3, **caractérisé en ce que** l'élément de rappel (54) est un ressort, de préférence un ressort de pression.

5. Dispositif de traitement des sols (1) selon l'une des revendications 1 à 4, **caractérisé en ce que** le dispositif de rappel (12) est une unité piston-cylindre.

6. Dispositif de traitement des sols (1) selon l'une des revendications 1 à 5, **caractérisé en ce que** le dispositif de rappel (12) conçu comme unité piston-cylindre s'étend essentiellement parallèlement au bras de support (10).

7. Dispositif de traitement des sols (1) selon l'une des revendications 1 à 6, **caractérisé en ce que** le dispositif de ressort (52) est un ressort de pression.

8. Dispositif de traitement des sols (1) selon l'une des revendications 1 à 7, **caractérisé en ce que** le dispositif de rappel (12) est couplé avec le châssis de machine (20) par le biais d'un dispositif de déplacement (18), dans lequel l'angle de pénétration (α) dans la position sortie de l'outil perforateur (28) est réglable au moyen du dispositif de déplacement (18).

9. Dispositif de traitement des sols (1) selon l'une des revendications 1 à 8, **caractérisé en ce qu'**au moins un porte-outil (26) est prévu pour l'au moins un outil perforateur (28), qui est disposé autour du premier axe de pivotement (24) dans le bras de support déplaçable en va-et-vient par l'entraînement (6).

10. Dispositif de traitement des sols (1) selon la revendication 9, **caractérisé en ce que** plusieurs outils perforateurs (28) sont fixés sur le porte-outil (26).

11. Dispositif de traitement des sols (1) selon la revendication 9 ou 10, **caractérisé en ce que** plusieurs porte-outils (26) sont agencés à côté l'un de l'autre, sur lesquels plusieurs outils perforateurs (28) sont respectivement fixés, grâce à quoi un dispositif de rappel (12) est couplé respectivement avec le porte-outil (26) .

12. Procédé de traitement d'un sol (2) par
- traction ou conduite d'un dispositif de traitement des sols (1) au-dessus d'une surface de sol (2),
- pénétration et retrait dans le sol (2) d'au moins un outil perforateur (28) couplé avec un châssis de machine (20),
- dans lequel l'outil perforateur (28) se trouve, avant pénétration dans le sol dans une position sortie avec un angle de pénétration prédéfini (α) et effectue dans le sol (2) en raison du mouvement du châssis de machine (20) un mouvement de pivot superposant le va-et-vient autour d'un premier axe de pivotement (24) dans la direction d'une première direction de pivotement (42),
- dans lequel l'outil perforateur (28) est ramené dans la position sortie par pivotement de l'outil perforateur (28) dans une deuxième direction de pivotement (43) opposée à la première direction de pivotement (42) après la sortie hors du sol (2) au moyen d'au moins un élément de rappel (54) qui est agencé dans au moins un dispositif de rappel (12), dans lequel le dispositif de rappel (12) est couplé avec le châssis de machine (20) à une première extrémité (12a) et avec l'outil perforateur (28) à une deuxième extrémité (12b),
- **caractérisé en ce qu'**un dispositif de ressort (52) agencé dans le dispositif de rappel (12) permet un pivotement de l'outil perforateur hors du sol au-delà de la position sortie dans la deuxième direction de pivotement (43) lorsqu'il heurte un objet dur (50) dans le sol (2), dans lequel l'outil perforateur (28) est entraîné en pivotement hors du sol au-delà de la position sortie et lorsqu'une force est exercée sur l'outil perforateur (28) dépassant une force prédéfinie.

13. Procédé selon la revendication 12, **caractérisé en ce que** l'outil perforateur (28) est entraîné en pivotement hors du sol contre la force de ressort de l'élément (52) de ressort au-delà de la position sortie lors d'un pivotement dans la deuxième direction de pivotement (43).
